# EUROPÄISCHE PATENTSCHRIFT

(11) **EP 3 169 536 B1**
(45) Veröffentlichungstag und Bekanntmachung des Hinweises auf die Patenterteilung: **01.04.2020**
(21) Anmeldenummer: 15722725.7
(22) Anmeldetag: 18.05.2015
(51) Int. Cl.: B60C 11/03

(54) **FAHRZEUGLUFTREIFEN**
VEHICLE TYRES
PNEUMATIQUE DE VÉHICULE

(30) Priorität: 14.07.2014 DE 102014213660
(43) Veröffentlichungstag der Anmeldung: 24.05.2017
(73) Patentinhaber: Continental Reifen Deutschland GmbH, 30165 Hannover (DE)
(72) Erfinder: BEHR, Ulrich, 30167 Hannover (DE)
(74) Vertreter: Finger, Karsten
(86) Internationale Anmeldenummer: PCT/EP2015/060839
(87) Internationale Veröffentlichungsnummer: WO 2016/008615

(56) Entgegenhaltungen:
- EP-A1- 0 455 925
- EP-A1- 0 659 592
- EP-A2- 1 088 685
- DE-A1- 3 442 300

## Beschreibung

Die Erfindung betrifft einen Fahrzeugluftreifen mit einem Laufstreifen, welcher, bei am Fahrzeug montiertem Reifen betrachtet, ein bei der Außenschulter angeordnetes Profilband aufweist, das durch eine in Umfangsrichtung umlaufende Umfangsrille von weiteren Profilpositiven getrennt ist, wobei im Profilband in Umfangsrichtung verlaufende, miteinander im Wesentlichen fluchtende, innerhalb des Profilbandes endende und voneinander beabstandete Kurzrillen verlaufen, an deren einen Enden jeweils lediglich eine in axialer Richtung zum Laufstreifenrand und über diesen hinaus verlaufende Querrille und an deren anderen Enden jeweils lediglich eine in axialer Richtung bis zur Umfangsrille verlaufende Querrille anschließt.

Ein bezüglich seiner Handlingeigenschaften optimierter Reifen sollte im Bereich seiner Außenschulter im Laufstreifen Profilpositive aufweisen, die möglichst massiv und stabil ausgeführt sind. Es wäre daher vorteilhaft, in diesem Laufstreifenbereich möglichst wenige Rillen auszubilden, was jedoch die Fähigkeit des Laufstreifens, Wasser schnell und effizient abzuleiten, stark beeinträchtigen würde. Eine gute Wasserableitung erfordert das Vorsehen von Rillen, die in Querrichtung und in Umfangsrichtung des Laufstreifens verlaufen. Ein Reifen der eingangs genannten Art ist beispielsweise aus der DE 10 2012 109 712 A1 bekannt. Bei diesem Reifen wurde bereits versucht, den Zielkonflikt zwischen guten Handlingeigenschaften und einem guten Wasserableitvermögen im Außenschulterbereich des Laufstreifens zu lösen, indem im Profilband im Außenschulterbereich mit Querrillen verbundene, sich im Wesentlichen in Umfangsrichtung erstreckende Kurzrillen vorgesehen sind, die an ihren Enden mit Querrillen verbunden sind. Die sich in Umfangsrichtung erstreckenden Kurzrillen sind von auf spezielle Weise schräg verlaufenden Rillenflanken begrenzt, die Querrillen sind an der Laufstreifenoberfläche mit Fasen versehen. Die Fasen sollen vor allem bei neuem Reifen ein größeres Negativvolumen im Profilband zur Verfügung stellen und damit ein gutes Aquaplaningverhalten im Außenschulterbereich gewährleisten. Die bekannte Ausführung ist jedoch sowohl hinsichtlich des Wasserableitvermögens als auch hinsichtlich der Quersteifigkeit des Profilbandes verbesserungswürdig, insbesondere, wenn die Handlingbeanspruchungen höher sind, was vor allem bei sportlich gefahrenen Fahrzeugen von Bedeutung ist.

Die EP 0 659 592 A1 offenbart einen Laufstreifen mit ausgeprägten Profiblöcken in beiden Schulterbereichen. Der Laufstreifen ist, wie es bei Fahrzeugluftreifen üblich ist, gemäß einem Verfahren der Pitchlängen-Variation geräuschoptimiert, wobei zur Verringerung des Abrollgeräusches die Querschnittsfläche von breiten Umfangsrillen im mittleren Bereich des Laufstreifens über ihre Umfangserstreckung variiert wird. Die EP 1 088 685 A2 offenbart einen Winterreifen für Nutzfahrzeuge mit einem Blockprofil, wobei mehrere Blockreihen vorgesehen sind, deren Profilblöcke in axialer Richtung gegeneinander versetzt sind, sodass jeweils zwei Profilblöcke aus benachbarten Profilblockreihen über Profilpositivbrücken miteinander verbunden sind. Der Laufstreifen weist daher keine in Umfangsrichtung umlaufende Umfangsrillen auf. Der aus der DE 34 42 300 A1 bekannte Fahrzeugluftreifen soll für den Ganzjahreseinsatz geeignet sein und besitzt einen Laufstreifen mit einem zentralen Laufstreifenband sowie mit beidseitig des Laufstreifenbandes angeordneten Profilblockreihen. Auch der aus der EP 0 455 925 A1 bekannte Fahrzeugluftreifen weist einen Laufstreifen mit schulterseitigen Profilblockreihen auf und soll sich vor allem für einen Ganzjahreseinsatz eignen.

Der Erfindung liegt somit die Aufgabe zugrunde, einen Reifen der eingangs genannten Art entsprechend zu verbessern und dabei insbesondere die Lösung des Zielkonfliktes zwischen Maßnahmen, die zur Optimierung der Handlingeigenschaften gesetzt werden, und Maßnahmen, die zur Optimierung des Wasserableitvermögens und der Bremseigenschaften auf Nässe gesetzt werden, auf ein höheres Niveau zu setzen.

Gelöst wird die gestellte Aufgabe erfindungsgemäß dadurch, dass jeweils etwa mittig zwischen den in Umfangsrichtung benachbarten, an das jeweils eine Ende der Kurzrillen anschließenden Querrillen und jeweils etwa mittig zwischen den in Umfangsrichtung benachbarten, an das jeweils andere Ende der Kurzrillen anschließenden Querrillen jeweils eine weitere Querrille verläuft.

Bei der Erfindung sind zusätzlich zu den an den Enden der Kurzrillen angesetzten Querrillen zwischen diesen weitere Querrillen vorhanden, sodass die Kurzrillen wesentlich länger auszuführen sind, als jene aus dem oben erwähnten Stand der Technik. Die längeren Kurzrillen verbessern gemeinsam mit der Vielzahl an Querrillen merkbar das Wasserableitvermögen des Profilbandes im Außenschulterbereich, wobei gleichzeitig durch sämtliche Querrillen eine kompakte und sich gegenseitig stützende blockartige Struktur gebildet wird, die gute Handlingeigenschaften auch bei hohen Beanspruchungen sicherstellt.

Bei einer bevorzugten Ausführungsform der Erfindung weisen die in Umfangsrichtung verlaufenden Kurzrillen eine Umfangslänge von 20 mm bis 38 mm und einen gegenseitigen, in Umfangsrichtung ermittelten Abstand von 3 mm bis 8 mm auf. Für die Umfangs- und die Quersteifigkeit des Profilbandes ist es günstig, wenn die Kurzrillen einerseits eine gewisse Mindestlänge und andererseits eine gewisse maximale Länge aufweisen. In diesem Zusammenhang ist es auch von Bedeutung, dass der durch die Länge der Kurzrillen bestimmte gegenseitige Abstand der beidseitig der Kurzrillen verlaufenden Querrillen weder zu klein noch zu groß wird.

Besondere Ausgestaltungen des erfindungsgemäßen Konzeptes - Kurzrillen mit Querrillen in Kombination mit weiteren Querrillen - erlauben es, auf die Stabilität des Profilbandes, insbesondere auf die Quersteifigkeit des Profilbandes und auch auf das Wasserableitvermögen gezielt Einfluss zu nehmen.

Für eine ausgewogene Quersteifigkeit ist es vor allem günstig, wenn die zwischen den zum Laufstreifenrand verlaufenden Querrillen angeordneten weiteren Querrillen ebenfalls über den Laufstreifenrand hinaus und parallel zu den erstgenannten Querrillen verlaufen und wenn die zwischen den zur Umfangsrille verlaufenden Querrillen angeordneten weiteren Querrillen ebenfalls parallel zu den zur Umfangsrille verlaufenden Querrillen verlaufen.

Das Wasserdrainagevermögen des Profilbandes wird erfindungsgemäß insbesondere dann unterstützt, wenn die zwischen den zum Laufstreifenrand verlaufenden Querrillen angeordneten weiteren Querrillen jeweils in eine Kurzrille münden und wenn die zwischen den zur Umfangsrille verlaufenden Querrillen angeordneten weiteren Querrillen entweder in die Umfangsrille oder in eine Kurzrille münden.

Andere Anordnungen der Querrillen und der weiteren Querrillen wirken sich besonders positiv auf die Quersteifigkeit und die Stabilität des Profilbandes aus. In diesem Zusammenhang ist es insbesondere vorteilhaft, wenn die zwischen den zum Laufstreifenrand verlaufenden Querrillen angeordneten weiteren Querrillen in einem axialen Abstand von 2 mm bis 4 mm vor den Kurzrillen enden und wenn die zwischen den zur Umfangsrille verlaufenden Querrillen angeordneten weiteren Querrillen in einem axialen Abstand von 2 mm bis 4 mm vor der Umfangsrille oder einer Kurzrille enden.

Um vor allem bei neuem Reifen im Profilband ein größeres Negativvolumen für eine gute Wasserableitung zur Verfügung zu haben, ist es vorteilhaft, wenn die Querrillen und/oder die weiteren Querrillen jeweils zumindest eine Rillenflanke aufweisen, die an ihrem Übergangsbereich zur Profilbandaußenfläche mit einer Fase versehen ist.

Für die Stabilität des Profilbandes sowie auch eine gleichmäßige Umfangs- und Quersteifigkeit ist es vorteilhaft, wenn die Fasen der Querrillen, die an der einen Seite der Kurzrillen verlaufen, sämtlich an der, bezogen auf die Umfangsrichtung des Laufstreifens, gleichen Rillenflanke ausgebildet sind und wenn die Fasen der Querrillen, die an die Enden der Kurzrillen anschließen, jeweils an der am inneren Eckbereich der Kurzrillen ansetzenden Rillenflanke ausgebildet sind.

Weitere Merkmale, Vorteile und Einzelheiten der Erfindung werden anhand der Zeichnung, die Ausführungsbeispiele darstellt, näher beschrieben. Dabei zeigen
Fig. 1 eine schematische Ansicht eines Umfangsabschnittes eines Laufstreifens eines Fahrzeugluftreifens mit einer ersten Ausführungsform der Erfindung,
Fig. 2 eine Schnittdarstellung gemäß der Linie II-II der Fig. 1,
Fig. 3 eine schematische Ansicht eines Umfangsabschnittes eines Laufstreifens eines Fahrzeugluftreifens mit einer zweiten Ausführungsform der Erfindung und
Fig. 4 eine Schnittdarstellung gemäß der Linie IV-IV der Fig. 3.

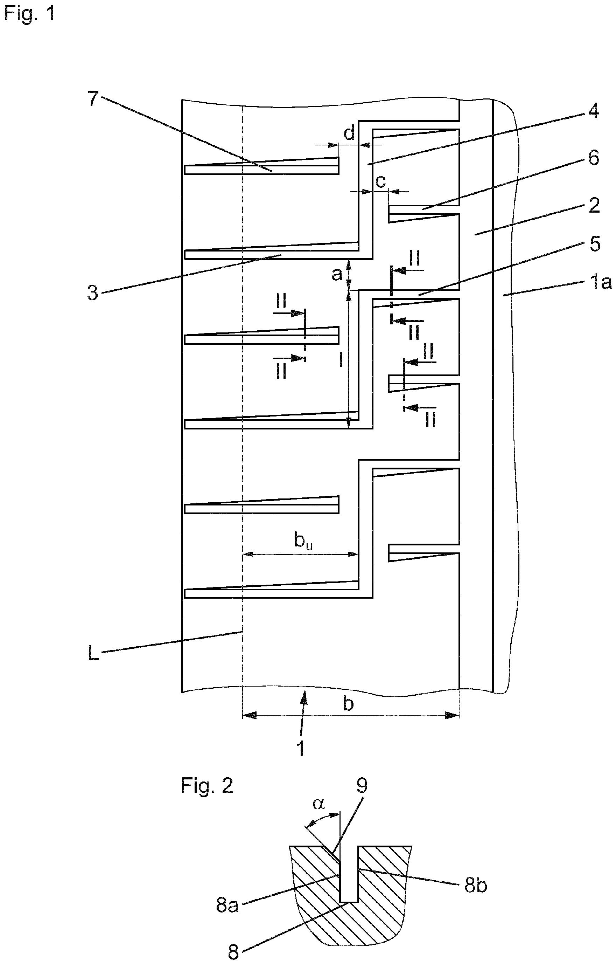

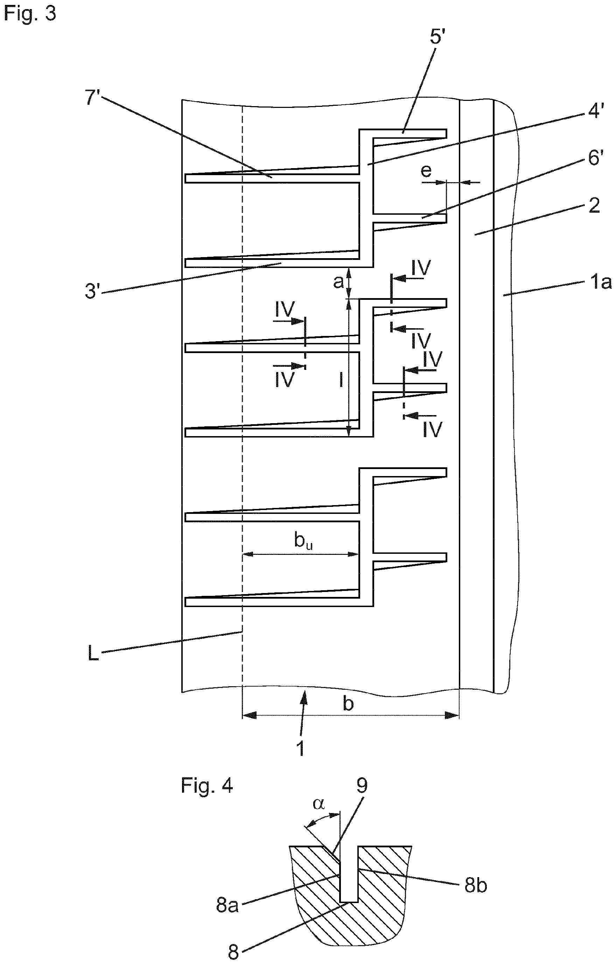

Die Figuren 1 und 3 zeigen Draufsichten auf Umfangsabschnitte von Profilbändern 1 eines Laufstreifens eines Fahrzeugluftreifens, insbesondere eines Reifens für Personenkraftwagen, Vans oder dergleichen. Die dargestellten Profilbänder 1 sind im außenseitigen Teil eines als sogenanntes "asymmetrisches" Laufstreifenprofil gestalteten Laufstreifenprofils angeordnet. Solche Laufstreifenprofile weisen in den beiden Laufstreifenhälften strukturell unterschiedlich gestaltete Profilierungen auf, die hinsichtlich bestimmter Eigenschaften des Reifens bzw. Laufstreifens entsprechend ausgeführt sind. Die dargestellten Profilbänder 1 befinden sich bei der "Außenschulter" des Reifens, welche bekannterweise jener schulterseitige Bereich des Reifens ist, der bei am Fahrzeug montiertem Reifen an der Außenseite des Fahrzeuges sichtbar ist. Die in den Figuren links im Profilband 1 eingezeichnete Linie L kennzeichnet den einen Rand des Laufstreifens, den Rand der bodenberührenden Fläche bzw. Bodenaufstandsfläche, die dem statisch ermittelten Footprint gemäß E.T.R.T.O.-Standards (Last bei 70 % der Tragfähigkeit bei einem Innendruck von 2,5 bar und einem Innendruck von 85 % von 2,5 bar) entspricht. Das Profilband 1 weist eine Breite b auf, die 20 % bis 40 % der Breite des Laufstreifens in der Bodenaufstandsfläche beträgt, und ist durch eine breite Umfangsrille 2, die bei den dargestellten Ausführungsformen gerade in Umfangsrichtung verläuft, beispielsweise von einem weiteren Profilband 1a getrennt, dessen Profilierung nicht Gegenstand der Erfindung ist. Die an dieses Profilband 1a zu dem in den Figuren rechts befindlichen Laufstreifenrand anschließenden Profilstrukturen sind ebenfalls nicht erfindungswesentlich und daher nicht dargestellt.

In einem Abstand b_{U} von 55 % bis 75 % der Breite b vom Laufstreifenrand L verlaufen im Profilband 1 zumindest im Wesentlichen in fluchtender Anordnung zueinander und in Umfangsrichtung Kurzrillen 4 (Fig. 1) und Kurzrillen 4' (Fig. 3). Die Kurzrillen 4, 4' weisen eine Tiefe auf, die mindestens 70 % der maximalen Profiltiefe, die der Tiefe der Umfangsrille 2 entspricht und für die betreffenden Reifen in der Größenordnung von 6,0 mm bis 8,5 mm gewählt wird, beträgt. Die Breite der Kurzrillen 4, 4' an der Laufstreifenaußenseite beträgt 2,5 mm bis 4 mm. Die Kurzrillen 4, 4' verlaufen unter gegenseitigen Abständen a, welche in Umfangsrichtung ermittelt werden und in der Größenordnung von 3 mm bis etwa 8 mm betragen. Diese Abstände a sowie die Umfangslängen 1 der Kurzrillen 4, 4' variieren nach der jeweiligen Pitchlänge, wobei die Umfangslängen 120 mm bis 38 mm betragen können. In Fig. 1 und Fig. 3 wurde auf die Darstellung unterschiedlicher Pitchlängen verzichtet. Es ist allgemein üblich, Laufstreifenprofilstrukturen gemäß einem Verfahren der Pitchlängenvariation zu gestalten, um das Abrollgeräusch zu reduzieren. Bei solchen Verfahren werden die sich über den Umfang wiederholenden Profilelemente, beispielsweise Profilblöcke oder blockartige Profilelemente, aber auch Querrillen und dergleichen, mit unterschiedlichen Umfangslängen ausgeführt. Nachdem die Pitchlängenvariation der Profilstrukturen des Laufstreifens nicht Gegenstand der Erfindung ist, wird auf sie nicht näher eingegangen.

Bei der in Fig. 1 dargestellten Variante ist jeweils das eine Ende - bei allen Kurzrillen 4 jeweils das gleiche Ende - jeder Kurzrille 4 mit einer Querrille 3 in Verbindung, die im Wesentlichen in axialer Richtung zum Laufstreifenrand L und über diesen hinaus verläuft. Das zweite Ende jeder Kurzrille 4 ist mit einer Querrille 5 in Verbindung, welche im Wesentlichen ebenfalls in Querrichtung des Laufstreifens, jedoch in Richtung Umfangsrille 2 verläuft und in diese einmündet. Jeweils etwa mittig zwischen in Umfangsrichtung benachbarten Querrillen 5 verlaufen parallel zu diesen weitere Querrillen 6, die sich von der Umfangsrille 2 ausgehend in Richtung der Kurzrillen 4 erstrecken und in einem geringen Abstand c von 2 mm bis 4 mm vor den Kurzrillen 4 enden. Zwischen den in Umfangsrichtung benachbarten Querrillen 3 verlaufen ebenfalls parallel zu diesen und etwa mittig zwischen benachbarten Querrillen 5 Querrillen 7, welche in einem Abstand d von 2 mm bis 4 mm vor den Kurzrillen 4 enden und ansonsten analog zu den Querrillen 5 verlaufen.

Bei der in Fig. 3 gezeigten Variante sind die einen Enden der Kurzrillen 4' mit Querrillen 3' in Verbindung, die im Wesentlichen in axialer Richtung und zum Laufstreifenrand L und über diesen hinaus verlaufen. Jeweils an den anderen Enden der Kurzrillen 4' schließen Querrillen 5' an, die in Richtung Umfangsrille 2 verlaufen und in einem Abstand e von etwa 2 mm bis 4 mm vor dieser enden. Etwa mittig zwischen den in Umfangsrichtung benachbarten Querrillen 5' verlaufen parallel zu diesen weitere Querrillen 6', die in die Kurzrillen 4' einmünden und analog zu den Querrillen 5' den Abstand e von 2 mm bis 4 mm zur Umfangsrille 2 aufweisen. Etwa mittig zwischen den Querrillen 3' verlaufen weitere, in die Kurzrillen 4' mündende Querrillen 7', welche parallel zu den Querrillen 3' verlaufen.

Die Querrillen 3, 3', 5, 5', 6, 6' und 7, 7' sind schmale Rillen mit einem etwa 0,5 mm bis 2 mm breiten Rillengrund 8, mit Rillenflanken 8a, 8b, die im Wesentlichen in radialer Richtung verlaufen und mit zumindest an einer der Rillenflanken 8a, 8b zur Laufstreifenaußenfläche verlaufenden Fase 9. Die Fasen 9 sind Schrägflächen, welche beispielsweise mit einem sich über ihren Verlauf entlang der Querrillen 3, 3', 5, 5', 6, 6', 7, 7' kontinuierlich ändernden Winkel α gegenüber der radialen Richtung verlaufen, welcher sich üblicherweise von 0° bis 10° auf 30° bis 65° ändert. Die Fasen 9 können jedoch auch unter einem bestimmten konstanten Winkel von vorzugsweise 30° bis 65° zur radialen Richtung verlaufen. Die Anordnung der Fasen 9 ist insbesondere derart, dass sie bei den Rillen 5, 5', 6, 6' und den Rillen 3, 3' und 7, 7' jeweils an die gleichen (bezogen auf die Umfangsrichtung des Laufstreifens) Rillenflanken zur Profilbandaußenseite anschließen, wobei - bezogen auf die Umfangsrichtung des Laufstreifens und den Verlauf der Kurzrillen 4, 4' - in den Rillen 3, 3' und 5, 5' die Fasen 9 an den am inneren Eckbereich der Kurzrillen 4, 4' anschließenden Rillenflanken ausgeführt sind.

Die Tiefe der Querrillen 5, 5' und 6, 6' nimmt in Richtung Umfangsrille 2 ab, die Rillen 5', 6' können an ihren geschlossenen Enden an der Profilbandoberfläche auslaufen. Bei den Mündungsbereichen der Querrillen 3' und 7' in die Kurzrillen 4' können Grundanhebungen ausgebildet sein, dies sind lokale Gummibrücken, deren Abstand zur Profilbandoberfläche in der Größenordnung von 2 mm bis 3 mm beträgt. Diese Grundanhebungen tragen zu einer Stabilisierung und Versteifung des Profilbandes 1 bei.

### Bezugsziffernliste

- 1: Profilband
- 1a: Profilband
- 2: Umfangsrille
- 3, 3': Querrille
- 4, 4': Kurzrille
- 5, 5': Quernut
- 5a: Grundabschnitt
- 5b: Fase
- 6, 6': Querrille
- 7, 7': Querrille
- 8: Rillengrund
- 8a, 8b: Rillenflanke
- 9: Fase
- a, c, d, e: Abstand
- b, b_{U}: Breite
- L: Laufstreifenrand
- 1: Umfangslänge
- α: Winkel

## Patentansprüche

1. Fahrzeugluftreifen mit einem Laufstreifen, welcher, bei am Fahrzeug montiertem Reifen betrachtet, ein bei der Außenschulter angeordnetes Profilband (1) aufweist, das durch eine in Umfangsrichtung umlaufende Umfangsrille (2) von weiteren Profilpositiven getrennt ist, wobei im Profilband (1) in Umfangsrichtung verlaufende, miteinander im Wesentlichen fluchtende, innerhalb des Profilbandes (1) endende und voneinander beabstandete Kurzrillen (4, 4') verlaufen, an deren einen Enden jeweils lediglich eine und in axialer Richtung zum Laufstreifenrand (L) und über diesen hinaus verlaufende Querrille (3, 3') und an deren anderen Enden jeweils lediglich eine und in axialer Richtung zur Umfangsrille (2) verlaufende Querrille (5, 5') anschließt, **dadurch gekennzeichnet,**
**dass** jeweils etwa mittig zwischen den in Umfangsrichtung benachbarten, an das jeweils eine Ende der Kurzrillen (4, 4') anschließenden Querrillen (3, 3') und jeweils etwa mittig zwischen den in Umfangsrichtung benachbarten, an das jeweils andere Ende der Kurzrillen (4, 4') anschließenden Querrillen (5, 5') jeweils eine weitere Querrille (6, 6', 7, 7') axial verläuft.

2. Fahrzeugluftreifen nach Anspruch 1, **dadurch gekennzeichnet, dass** die in Umfangsrichtung verlaufenden Kurzrillen (4, 4') eine Umfangslänge (1) von 20 mm bis 38 mm und in Umfangsrichtung einen gegenseitigen Abstand (a) von 3 mm bis 8 mm aufweisen.

3. Fahrzeugluftreifen nach Anspruch 1 oder 2, **dadurch gekennzeichnet, dass** die zwischen den zum Laufstreifenrand (L) verlaufenden Querrillen (3, 3') angeordneten weiteren Querrillen (7, 7') ebenfalls über den Laufstreifenrand (L) hinaus und parallel zu den erstgenannten Querrillen (3, 3') verlaufen.

4. Fahrzeugluftreifen nach einem der Ansprüche 1 bis 3, **dadurch gekennzeichnet, dass** die zwischen den zum Laufstreifenrand (L) verlaufenden Querrillen (3') angeordneten weiteren Querrillen (7') jeweils in eine Kurzrille (4') münden.

5. Fahrzeugluftreifen nach einem der Ansprüche 1 bis 3, **dadurch gekennzeichnet, dass** die zwischen den zum Laufstreifenrand (L) verlaufenden Querrillen (3) angeordneten weiteren Querrillen (7) in einem axialen Abstand (d) von 2 mm bis 4 mm vor den Kurzrillen (4) enden.

6. Fahrzeugluftreifen nach Anspruch 1 oder 2, **dadurch gekennzeichnet, dass** die zwischen den zur Umfangsrille (2) verlaufenden Querrillen (5, 5') angeordneten weiteren Querrillen (6, 6') parallel zu den erstgenannten Querrillen (5, 5') verlaufen.

7. Fahrzeugluftreifen nach einem der Ansprüche 1, 2 oder 6, **dadurch gekennzeichnet, dass** die zwischen den zur Umfangsrille (2) verlaufenden Querrillen (5, 5') angeordneten weiteren Querrillen (6, 6') entweder in die Umfangsrille (2) oder in eine Kurzrille (4, 4') münden.

8. Fahrzeugluftreifen nach einem der Ansprüche 1, 2 oder 6, **dadurch gekennzeichnet, dass** die zwischen den zur Umfangsrille (2) verlaufenden Querrillen (5, 5') angeordneten weiteren Querrillen (6, 6') in einem axialen Abstand (c, e) von 2 mm bis 4 mm vor der Umfangsrille (2) oder einer Kurzrille (4, 4') enden.

9. Fahrzeugluftreifen nach einem der Ansprüche 1 bis 8, **dadurch gekennzeichnet, dass** die von dem einen Ende der Kurzrillen (4, 4') in Richtung Umfangsrille (2) verlaufenden Querrillen (5, 5') entweder in die Umfangsrille (2) münden oder in einem Abstand (e) von 2 mm bis 4 mm vor der Umfangsrille (2) enden.

10. Fahrzeugluftreifen nach einem der Ansprüche 1 bis 9, **dadurch gekennzeichnet, dass** die Querrillen (3, 3', 5, 5') und/oder die weiteren Querrillen (6, 6', 7, 7') jeweils zumindest eine Rillenflanke (8a, 8b) aufweisen, die an ihrem Übergangsbereich zur Profilbandaußenfläche mit einer Fase (9) versehen ist.

11. Fahrzeugluftreifen nach Anspruch 10, **dadurch gekennzeichnet, dass** die Fasen (9) der Querrillen (3, 3', 7, 7'), die an der einen Seite der Kurzrillen (4, 4') verlaufen, sämtlich an der, bezogen auf die Umfangsrichtung des Laufstreifens, gleichen Rillenflanke (8a, 8b) ausgebildet sind.

12. Fahrzeugluftreifen nach einem der Ansprüche 10 oder 11, **dadurch gekennzeichnet, dass** die Fasen (9) der Querrillen (, 3', 5, 5'), die an die Enden der Kurzrillen (4, 4') anschließen, jeweils an der am inneren Eckbereich der Kurzrillen (4, 4') ansetzenden Rillenflanke (8a, 8b) ausgebildet sind.

13. Fahrzeugluftreifen nach einem der Ansprüche 1 bis 12, **dadurch gekennzeichnet, dass** das Profilband (1) eine Breite (b) von 20 % bis 40 % der Bodenaufstandsflächenbreite aufweist.

14. Fahrzeugluftreifen nach einem der Ansprüche 1 bis 13, **dadurch gekennzeichnet, dass** der Abstand (bᵤ) der Kurzrillen (4) vom Laufstreifenrand (L) des Profilbandes (1) 55 % bis 75 % der Profilbandbreite (b) beträgt.

## Claims

1. Pneumatic vehicle tyre comprising a tread which, when considered with the tyre fitted on the vehicle, has a profile strip (1) arranged on the outer shoulder and separated from other profile positives by a circumferential groove (2) running in the circumferential direction, wherein short grooves (4, 4') run in the profile strip (1) in the circumferential direction, are substantially in line with one another, end within the profile strip and are spaced apart from one another, the one end of each of which is adjoined in each case by just one transverse groove (3, 3') running in the axial direction to the edge of the tread (L) and beyond and the other end of each of which is adjoined in each case by just one transverse groove (5 5') running in the axial direction to the circumferential groove (2) ,
**characterized**
**in that**, in each case approximately midway between the transverse grooves (3, 3') that are adjacent to one another in the circumferential direction and adjoin the one end respectively of the short grooves (4, 4') and in each case approximately midway between the transverse grooves (5, 5') that are adjacent to one another in the circumferential direction and adjoin the other end respectively of the short grooves (4, 4'), a further groove (6, 6', 7, 7') respectively runs axially.

2. Pneumatic vehicle tyre according to Claim 1, **characterized in that** the short grooves (4, 4') running in the circumferential direction have a circumferential length (1) of 20 mm to 38 mm and a mutual spacing (a) in the circumferential direction of 3 mm to 8 mm.

3. Pneumatic vehicle tyre according to Claim 1 or 2, **characterized in that** the further transverse grooves (7, 7') arranged between the transverse grooves (3, 3') running to the edge of the tread (L) likewise run beyond the edge of the tread (L) and parallel to the first-mentioned transverse grooves (3, 3').

4. Pneumatic vehicle tyre according to one of Claims 1 to 3, **characterized in that** the further transverse (7') arranged between the transverse grooves (3') running to the edge of the tread (L) in each case open out into a short groove (4').

5. Pneumatic vehicle tyre according to one of Claims 1 to 3, **characterized in that** the further transverse grooves (7) arranged between the transverse grooves (3) running to the edge of the tread (L) end before the short grooves (4) at an axial distance (d) of 2 mm to 4 mm.

6. Pneumatic vehicle tyre according to Claim 1 or 2, **characterized in that** the further transverse grooves (6, 6') arranged between the transverse grooves (5, 5') running to the circumferential groove (2) run parallel to the first-mentioned transverse grooves (5, 5').

7. Pneumatic vehicle tyre according to one of Claims 1 2 or 6, **characterized in that** the further transverse grooves (6, 6') arranged between the transverse grooves (5, 5') running to the circumferential groove (2) open out either into the circumferential groove (2) or into a short groove (4, 4').

8. Pneumatic vehicle tyre according to one of Claims 1, 2 or 6,
**characterized**
**in that** the further transverse grooves (6, 6') arranged between the transverse grooves (5, 5') running to the circumferential groove (2) end before the circumferential groove (2) or a short groove (4, 4') at an axial distance (c, e) of 2 mm to 4 mm.

9. Pneumatic vehicle tyre according to one of Claims 1 to 8, **characterized in that** the transverse grooves (5, 5') running from one end of the short grooves (4, 4') in the direction of the circumferential groove (2) either open out into the circumferential groove (2) or end before the circumferential groove (2) at a distance (e) of 2 mm to 4 mm.

10. Pneumatic vehicle tyre according to one of Claims 1 to 9, **characterized in that** the transverse grooves (3, 3', 5, 5') and/or the further transverse grooves (6, 6', 7, 7') have in each case at least one groove flank (8a, 8b), which is provided with a bevel (9) at its transitional region with respect to the outer surface of the profile strip.

11. Pneumatic vehicle tyre according to Claim 10, **characterized in that** the bevels (9) of the transverse grooves (3, 3', 7, 7') that run on one side of the short grooves (4, 4') are all formed on the same groove flank (8a, 8b) in relation to the circumferential direction of the tread.

12. Pneumatic vehicle tyre according to either of Claims 10 and 11, **characterized in that** the bevels (9) of the transverse grooves (, 3', 5, 5') that adjoin the ends of the short grooves (4, 4') are in each case formed on the groove flank (8a, 8b) adjacent to the inner corner region of the short grooves (4, 4').

13. Pneumatic vehicle tyre according to one of Claims 1 to 12, **characterized in that** the profile strip (1) has a width (b) of 20% to 40% of the width of the ground contact area.

14. Pneumatic vehicle tyre according to one of Claims 1 to 13, **characterized in that** the distance (bᵤ) of the short grooves (4) from the edge of the tread (L) of the profile strip (1) is 55% to 75% of the width (b) of the profile strip.

## Revendications

1. Pneumatique de véhicule comprenant une bande de roulement qui, vu dans l'état du pneu monté sur le véhicule, présente une bande profilée (1) disposée au niveau de l'épaulement extérieur, qui est séparée de parties profilées positives supplémentaires par une rainure périphérique (2) s'étendant sur la périphérie dans la direction périphérique, des rainures courtes (4, 4') s'étendant dans la direction périphérique, essentiellement en affleurement les unes avec les autres, se terminant à l'intérieur de la bande profilée (1) et espacées les unes des autres s'étendant dans la bande profilée (1), au niveau d'une extrémité desquelles se raccorde à chaque fois seulement une rainure transversale (3, 3') s'étendant dans la direction axiale par rapport au bord de la bande de roulement (L) et au-delà de celui-ci et au niveau de l'autre extrémité desquelles se raccorde à chaque fois seulement une rainure transversale (5, 5') s'étendant dans la direction axiale par rapport à la rainure périphérique (2),
**caractérisé en ce**
**qu'**à chaque fois une rainure transversale supplémentaire (6, 6', 7, 7') s'étend axialement à chaque fois approximativement centralement entre les rainures transversales (3, 3') adjacentes dans la direction périphérique, se raccordant à ladite une extrémité respective des rainures courtes (4, 4'), et à chaque fois approximativement centralement entre les rainures transversales (5, 5') adjacentes dans la direction périphérique, se raccordant à l'autre extrémité respective des rainures courtes (4, 4').

2. Pneumatique de véhicule selon la revendication 1, **caractérisé en ce que** les rainures courtes (4, 4') s'étendant dans la direction périphérique présentent une longueur périphérique (1) de 20 mm à 38 mm et, dans la direction périphérique, un espacement mutuel (a) de 3 mm à 8 mm.

3. Pneumatique de véhicule selon la revendication 1 ou 2, **caractérisé en ce que** les rainures transversales supplémentaires (7, 7') disposées entre les rainures transversales (3, 3') s'étendant vers le bord de la bande de roulement (L) s'étendent également au-delà du bord de la bande de roulement (L) et parallèlement aux rainures transversales susmentionnées (3, 3').

4. Pneumatique de véhicule selon l'une quelconque des revendications 1 à 3, **caractérisé en ce que** les rainures transversales supplémentaires (7') disposées entre les rainures transversales (3') s'étendant vers le bord de la bande de roulement (L) débouchent à chaque fois dans une rainure courte (4').

5. Pneumatique de véhicule selon l'une quelconque des revendications 1 à 3, **caractérisé en ce que** les rainures transversales supplémentaires (7) disposées entre les rainures transversales (3) s'étendant vers le bord de la bande de roulement (L) se terminent à une distance axiale (d) de 2 mm à 4 mm des rainures courtes (4).

6. Pneumatique de véhicule selon la revendication 1 ou 2, **caractérisé en ce que** les rainures transversales supplémentaires (6, 6') disposées entre les rainures transversales (5, 5') s'étendant vers la rainure périphérique (2) s'étendent parallèlement aux rainures transversales susmentionnées (5, 5').

7. Pneumatique de véhicule selon l'une quelconque des revendications 1, 2 et 6, **caractérisé en ce que** les rainures transversales supplémentaires (6, 6') disposées entre les rainures transversales (5, 5') s'étendant vers la rainure périphérique (2) débouchent soit dans la rainure périphérique (2) soit dans une rainure courte (4, 4').

8. Pneumatique de véhicule selon l'une quelconque des revendications 1, 2 et 6, **caractérisé en ce que** les rainures transversales supplémentaires (6, 6') disposées entre les rainures transversales (5, 5') s'étendant vers la rainure périphérique (2) se terminent à une distance axiale (c, e) de 2 mm à 4 mm de la rainure périphérique (2) ou d'une rainure courte (4, 4').

9. Pneumatique de véhicule selon l'une quelconque des revendications 1 à 8, **caractérisé en ce que** les rainures transversales (5, 5') s'étendant depuis l'une des extrémités des rainures courtes (4, 4') dans la direction de la rainure périphérique (2) soit débouchent dans la rainure périphérique (2) soit se terminent à une distance (e) de 2 mm à 4 mm de la rainure périphérique (2).

10. Pneumatique de véhicule selon l'une quelconque des revendications 1 à 9, **caractérisé en ce que** les rainures transversales (3, 3', 5, 5') et/ou les rainures transversales supplémentaires (6, 6', 7, 7') présentent à chaque fois au moins un flanc de rainure (8a, 8b) qui est pourvu d'un biseau (9) au niveau de sa région de transition à la surface extérieure de la bande profilée.

11. Pneumatique de véhicule selon la revendication 10, **caractérisé en ce que** les biseaux (9) des rainures transversales (3, 3', 7, 7') qui s'étendent au niveau de l'un des côtés des rainures courtes (4, 4') sont tous réalisés au niveau du même flanc de rainure (8a, 8b) par rapport à la direction périphérique de la bande de roulement.

12. Pneumatique de véhicule selon l'une quelconque des revendications 10 et 11, **caractérisé en ce que** les biseaux (9) des rainures transversales (, 3', 5, 5') qui se raccordent aux extrémités des rainures courtes (4, 4') sont à chaque fois réalisés au niveau du flanc de rainure (8a, 8b) s'appliquant contre la région de coin intérieure des rainures courtes (4, 4').

13. Pneumatique de véhicule selon l'une quelconque des revendications 1 à 12, **caractérisé en ce que** la bande profilée (1) présente une largeur (b) de 20 % à 40 % de la largeur de la surface d'appui au sol.

14. Pneumatique de véhicule selon l'une quelconque des revendications 1 à 13, **caractérisé en ce que** la distance (bᵤ) des rainures courtes (4) au bord de la bande de roulement (L) de la bande profilée (1) vaut 55 % à 75 % de la largeur de la bande profilée (b).
